# EUROPEAN PATENT SPECIFICATION

(11) **EP 2 049 324 B1**
(45) Date of publication and mention of the grant of the patent: **01.05.2013**
(21) Application number: 06796264.7
(22) Date of filing: 09.08.2006
(51) Int. Cl.: B29D 30/16, B29D 30/30, B29D 30/60, B29C 47/92

(54) **PROCESS AND APPARATUS FOR BUILDING PNEUMATIC TYRES**
VERFAHREN UND VORRICHTUNG ZUM BAU VON LUFTREIFEN
PROCÉDÉ ET APPAREIL DE FABRICATION DE PNEUS

(43) Date of publication of application: 22.04.2009
(73) Proprietor: Pirelli Tyre S.p.A., 20126 Milano (IT)
(72) Inventor: MARCHINI, Maurizio, I-20126 Milano (IT); AMURRI, Cesare, I-20126 Milan (IT)
(74) Representative: Tansini, Elio Fabrizio
(86) International application number: PCT/IT2006/000614
(87) International publication number: WO 2008/018098

(56) References cited:
- WO-A-01/36185
- JP-A- 2002 321 287
- JP-A- 2003 245 935
- JP-A- 2006 116 835
- US-A- 3 975 126
- US-A- 4 087 499
- US-A- 4 155 789
- US-A- 5 030 079
- US-A1- 2002 074 077
- US-A1- 2002 089 077
- US-B1- 6 554 041

## Description

The present invention relates to a process for building pneumatic tyres, and to an apparatus for building pneumatic tyres based on said process.

A tyre generally comprises a carcass structure including at least one carcass ply having end flaps in engagement with respective annular anchoring structures, each usually made up of at least one substantially circumferential annular insert to which at least one filling insert tapering radially away from the rotation axis is applied.

A belt structure comprising one or more belt layers is associated with the carcass structure at a radially external position, said belt layers being disposed in radial superposed relationship with respect to each other and to the carcass ply and having textile or metallic reinforcing cords with a crossed orientation and/or substantially parallel to the circumferential extension direction of the tyre.

A tread band is applied to the belt structure at a radially external position, which tread band is also made of elastomeric material like other semi-finished products constituting the tyre.

A so-called "under-layer" of elastomeric material having properties adapted to ensure steady fastening of the tread band itself, can be interposed between the tread band and the belt structure.

Respective sidewalls of elastomeric material are also applied to the side surfaces of the carcass structure, each extending from one of the side edges of the tread band until close to the respective annular anchoring structure to the beads.

It is to be pointed out, to the aims of the present description, that by the term "elastomeric material" it is intended a compound comprising at least one elastomeric polymer and at least one reinforcing filler. Preferably, this compound further comprises additives such as a cross-linking agent and/or a plasticizer, for example. Due to the presence of the cross-linking agent, this material can be cross-linked through heating, so as to form the final manufactured product.

In tyres of the tubeless type, the carcass ply is internally coated with a so-called liner consisting of a layer of preferably butyl-based elastomeric material having optimal air-tightness features and extending from one side of the beads to the other.

In tyres of the run flat type or for other particular uses, the carcass structure can be further provided with auxiliary support inserts of elastomeric material, placed at an axially internal position relative to each of the sidewalls. These auxiliary support inserts usually referred to as "sidewall inserts" lend themselves to support the loads transmitted to the wheel in case of accidental deflation of the tyre to enable the vehicle to run on, under safety conditions.

In many known processes for manufacture of a tyre, the carcass structure and belt structure, as well as the tread band, sidewalls and any other elastomeric structural element, are made separately from each other in respective work stations, and then stowed in storage stations or warehouses from which they are subsequently picked up for mutual assembly along a tyre building line.

It is to be pointed out that in this context by "component of elastomeric material" of the tyre it is intended any part of elastomeric material of the tyre (tread band, sidewalls, liner, under-liner, fillers in the bead region, inserts at the sidewalls in run flat tyres, abrasion-preventing inserts, for example), or a portion thereof, or yet the assembly formed of two or more of said parts or portions thereof.

US 2002074077 relates to a method of manufacturing a pneumatic tire. The apparatus for making and winding an unvulcanized rubber tape comprises an extruder including a screw and a die, a pair of rollers disposed near the outlet of the extruder's die to adjusting the thickness of the rubber tape, a plurality of cooling rollers for cooling the extruded rubber tape, a tape applicator which can traverse the building drum, and rollers for guiding and conveying the rubber tape to the applicator. The extruding speed, rollers' gap, drum speed, applicator speed, applicator position and the like are controlled by a computer according to stored programs and outputs of various sensors for the tape thickness, various positions, various speeds, temperature, etc. If necessary, a tape accumulator may be provided between the extruder and applicator.

JP2006116835 relates to a rubber weight detection system and weight detection method. The controlling section calculates and outputs every predetermined time during the tire molding process, the weight of the rubber that has been used in the molding, from the cross-section of the extruded rubber, the extrusion speed of the rubber and the rubber density at the observed temperature.

US3975126 relates to a method and apparatus for controlling the amount of extruded material being formed from rubber stock into a continuous ribbon for deposition upon a tire body during the retreading operation. The overall control is specifically designed to maintain the width of material being extruded within a described value.

More recently also production processes have been developed in which, as described in WO 00/35666 for example in the name of the same Applicant, components of elastomeric material of the tyre are obtained through delivery of an elastomeric elongated element from an extruder, for suitable distribution of same on a toroidal support carrying the tyre being processed, while rotation of said tyre around its axis is being caused. Simultaneously, the toroidal support hanging from a robotized arm, is moved in front of the extruder to cause transverse distribution of the elongated element and thus form a plurality of circumferential coils therewith, which coils are disposed in axial side by side relationship and/or radial superposition and the orientation and mutual-superposition parameters of which are adjusted so as to control the thickness variations to be given to the component of elastomeric material during manufacture, based on a predetermined deposition scheme previously set on an electronic computer.

In Patent US 5,171,394, components of elastomeric material of a tyre are formed on a rigid drum by means of a positive-displacement extruder having an outlet port of small sizes placed close to the surface to which the elastomer is to be applied. The components of elastomeric material are formed by actuation of the extruder relative to the surface of the toroidal support driven in rotation, concurrently with delivery of the elastomeric material in the form of a continuous elongated element.

US 6,955,734 discloses obtaining components of elastomeric material of a tyre by laying an elastomeric elongated element on a forming support, said elongated element being delivered by a system comprising a screw extrusion unit terminating at a gear pump, downstream of which an extrusion head having a delivery nozzle is arranged. Disposed between the delivery nozzle and the forming support is a pair of guide rollers the outer cylindrical surfaces of which are mutually spaced apart to define a gauged passage; thus the elongated element is gauged as to its thickness during passage through the clearance defined between the rollers, and also guided and applied against the forming support by one of the guide rollers, elastically urged against the forming support itself.

Patent specification US 5030079 - A discloses a method and an apparatus in which a strip of elastomeric material is initially formed by extruding the strip onto a rotating roller where it is initially shaped by a die plate spaced from the surface of the roller. A calender roll is positioned downstream of the die plate and has a calender surface in close proximity to the surface of the roller providing a finishing gap for finally shaping the strip of elastomeric material.

By measuring the size of the bank between the roller and the calender roll in the finishing gap, the rate of extrusion is be controlled to improve the weight uniformity of the strip and to provide contour uniformity of the extruded component.

The Applicant has verified that the tyres obtained by the above described building methods can have geometric and structural faults bringing about adverse effects both in terms of production waste and as regards the product quality. In particular, in spite of the attention and expedients adopted during manufacture of the individual components of elastomeric material through spiralling operations, the geometric and size accuracy of same often appears to be unsatisfactory. This problem is particularly apparent with reference to those components of elastomeric material that, after building of the tyre, must be submitted to a moulding operation of the so-called "imposed-volume" type, in which the tyre or given parts of same, the beads for example, are enclosed in a moulding cavity substantially having the same volume as that taken up by the material constituting the part itself submitted to moulding. In fact it has been verified that under this circumstance, small amounts of excess material in the component of elastomeric material submitted to moulding can prevent a correct closure of the mould and allow migration of the elastomeric material towards different tyre regions (in a radially external direction for example in the case of the beads), while material lacks of small amounts give rise to clear geometric and structural faults on the finished product.

The Applicant has also noticed that accuracy in working the components of elastomeric material is affected by different concurrent factors in the extrusion process, such as oscillations in the temperature and viscosity values of the elastomeric material within the strainer, wear of the inner members of the extrusion apparatus, pressure variations within the extrusion apparatus during the starting and stopping steps, and yet other factors that can hardly vary in a predictable and controllable manner.

In accordance with the Applicant's perception, all these variables cause as the final effect, more or less sudden important variations in the cross-section sizes of the elongated element applied to the forming support.

In accordance with the present invention, the Applicant has found the possibility of overcoming the above described problems by providing a pair of counter-rotating shaping rollers disposed downstream of the strainer for carrying out shaping of a continuous elongated element, and by executing during working, a constant control of the volumetric flow rate of the material passing between the shaping rollers, to modify the linear feeding speed of the material to the rollers in response to possible flow rate variations, so as to keep the elongated-element section variations within a predetermined range.

In more detail, in a first aspect the present invention relates to a process for building tyres as defined in claim 1. In accordance with a second aspect of the present invention it is proposed an apparatus for building tyres as defined in claim 14. Particular embodiments of the invention are defined in the dependent claims. When the monitoring device detects a flow rate that is lower than a predetermined minimum threshold, an increase in the feeding speed of the continuous thread element is carried out, said feeding speed being reduced when a flow rate higher than a pre-set maximum threshold is detected. Thus a careful control of the quantity of elastomeric material applied to the forming support is obtained. Consequently, a greater geometric and size accuracy of the individual components of elastomeric material of the tyre formed by deposition of the elongated element can be obtained.

Use of counter-rotating rollers to carry out forming of the elongated element further allows a continuous thread element of circular or approximately circular section to be extruded. Thus a more fluent and direct outflow of the elastomeric material can be provided from the outlet port of the extruder thus restricting the stresses usually imposed to the elastomeric material in the extruder's exit die that in the known art has important section variations to cause shaping of the elongated element in its final conformation. Thus all problems connected with wear of the surfaces of the dies used in the known art are eliminated as well as the drawbacks concerned with formation of deposits and incrustations within the die itself. It is also possible to reduce the temperature of the elastomeric material within the die, so that overheating and/or cross-linking initiation in the stopping steps of the laying operation does not occur.

Feeding of the elastomeric material to the shaping rollers can be carried out directly by the extruder, or by a pair of rollers or other driving devices operating downstream of the extruder itself. In this case, a storage step of the elastomeric thread element can be advantageously carried out at a storage length included between the extruder and the shaping rollers, so as to enable greater cooling and size stabilisation of the continuous thread element before it is disposed between the shaping rollers.

Shaping is preferably carried out by conducting the continuous thread element through a shaped clearance defined between the shaping rollers and preferably engaging said continuous thread element substantially on the whole cross-section outline extension of same, so as to give the formed elongated element a desired cross-section outline, preferably of trapezoidal form.

In a preferred embodiment, the flow rate of the elastomeric material between the shaping rollers is monitored by cyclically detecting the cross-section area of the continuous thread element immediately upstream of the shaped clearance.

The feeding speed of the thread element towards the shaping rollers can be advantageously adjusted by modifying the delivery speed of the elastomeric material through the extruder, by intervening on the rotation of a feeding screw being part of said extruder and/or of a positive-displacement pump, of the gear type for example, possibly disposed upstream of an outlet port of the extruder.

Alternatively, the feeding speed of the thread element towards the shaping rollers is adjusted by acting on a driving device downstream of the extruder.

Preferably, application of the elongated element onto the forming support takes place by at least one roller or other applicator members operatively supported with respect to the shaping rollers and acting in thrust relationship towards the forming support. This applicator roller can advantageously be spaced from the shaping rollers, so that the latter do not hinder movement of the applicator roller on the surface of the forming support.

Further features and advantages will become more apparent from the description of a preferred, but not exclusive, embodiment of a process and an apparatus for building tyres, in accordance with the present invention. This description will be set out hereinafter with reference to the accompanying drawings, given by way of non-limiting example, in which:
- Fig. 1 is a diagrammatic top view of a plant for producing tyres comprising a building apparatus in accordance with the present invention;

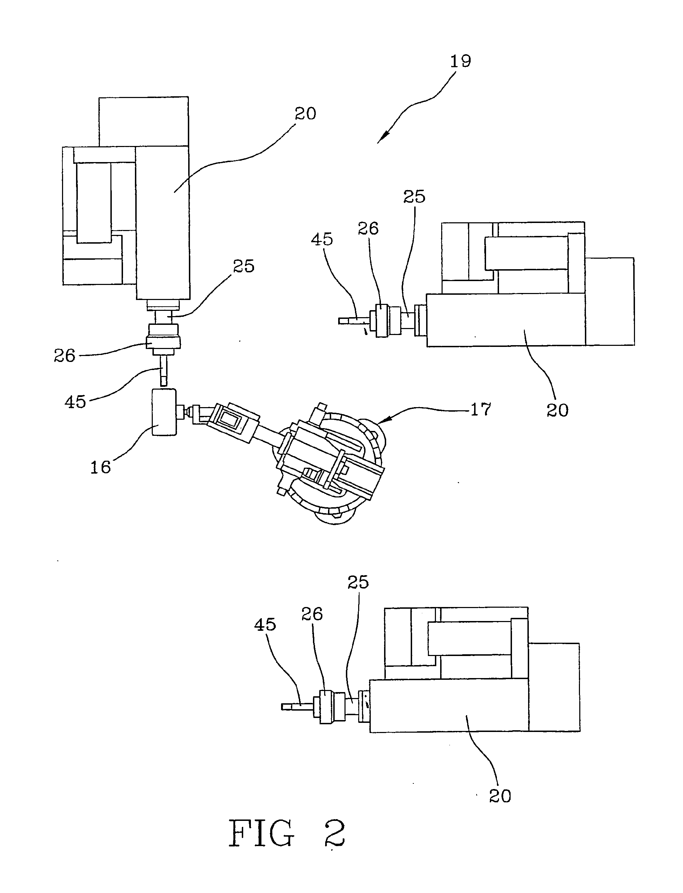

- Fig. 2 diagrammatically shows a detail of the plant in Fig. 1 from top;
- Fig. 3 is a diagrammatic side view of an assembly device being part of the apparatus in reference, according to a first embodiment;
- Fig. 4 is a diagrammatic side view of a second embodiment of the assembly device shown in Fig. 3;
- Fig. 5 shows a section taken along line V-V in Figs. 3 and 4, to an enlarged scale;
- Fig. 6 is a diametrical section view of an example of a tyre obtainable in accordance with the present invention.

With reference to the drawings, a plant for producing tyres comprising a building apparatus 2 according to the present invention has been generally identified with reference numeral 1.

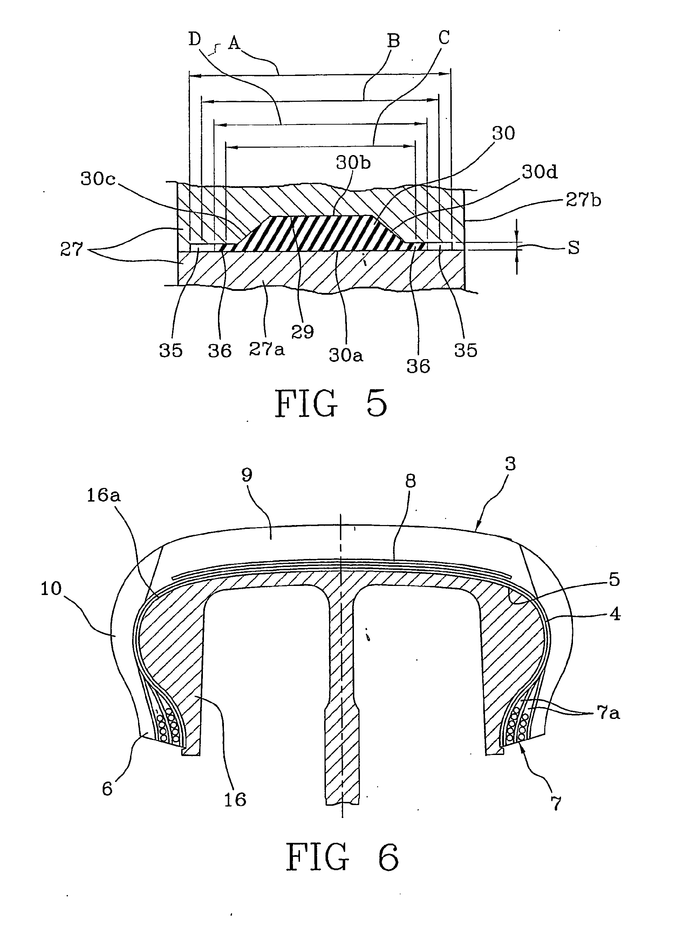

Plant 1 is intended for manufacture of tyres 3 (Fig. 6) essentially comprising at least one carcass ply 4 preferably internally coated with a so-called liner 5 or layer of elastomeric material impervious to air, two so-called "beads" 6 integrating respective annular anchoring structures 7 possibly associated with elastomeric fillers 7a and in engagement with the circumferential edges of the carcass ply 4, a belt structure 8 circumferentially applied around the carcass ply 4, a tread band 9 circumferentially superposed on the belt structure 8, at a so-called crown region of tyre 3, and two sidewalls 10 applied to the carcass ply 4 at laterally opposite positions, each at a side region of the tyre 3, extending from the corresponding bead 6 to the corresponding side edge of the tread band 9.

In run flat tyres or tyres intended for particular uses, auxiliary support inserts (not shown) can be further provided, of the type usually referred to as "sidewall inserts" for example, applied close to the sidewalls internally of the carcass ply 4 or between two paired carcass plies 4, and/or at an axially external position to said at least one carcass ply 4. The building apparatus 2 may comprise a plurality of building stations 11, 12, 13, 14, 15, each being for example provided to form one component of the tyre 3 being processed directly on a forming support 16 preferably of toroidal conformation, having a forming surface 16a with a conformation corresponding to the inner conformation of the tyre 3 itself when building has been completed. Alternatively, one or more components of the tyre 3 being processed, instead of being directly manufactured on the forming support 16 of toroidal conformation, are provided to be obtained as semifinished products from preceding working steps and to be assembled to other components on a forming drum that can have a cylindrical conformation or other shape different from that of the forming support 16 described above.

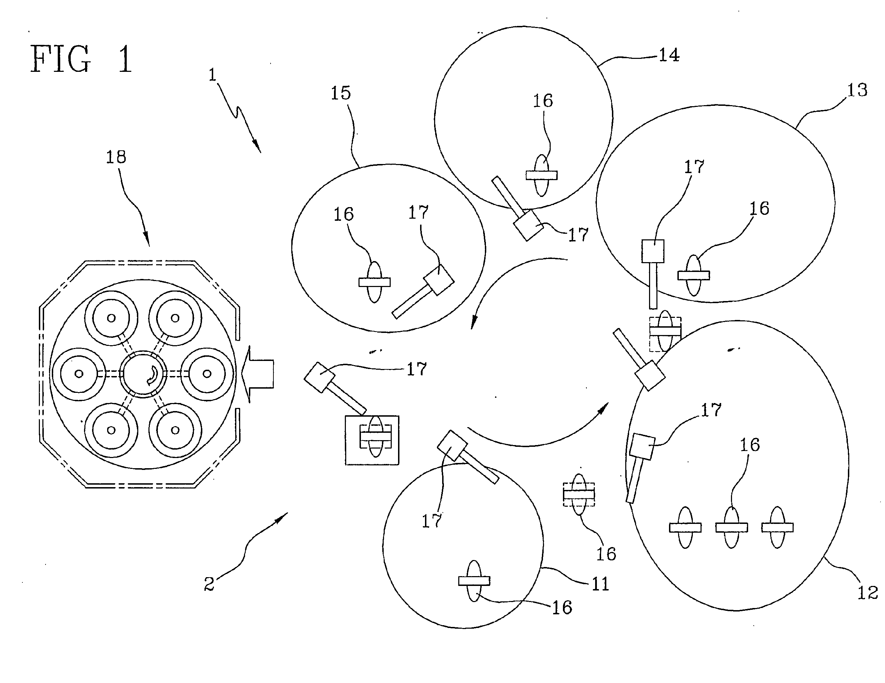

By way of example, shown in Fig. 1 is a first station 11 at which liner 5 is manufactured through winding of a continuous elongated element of elastomeric material into coils disposed in mutual side by side relationship and distributed along the forming surface 16a of the forming support 16 of toroidal conformation. In at least one second building station 12, manufacture of one or more carcass plies 4 can be carried out, which carcass plies are obtained by laying on the forming support 16, in circumferentially approached relationship, strip-like elements obtained from a continuous strip of elastomeric material comprising textile or metallic cords disposed in parallel side by side relationship. A third building station 13 can be dedicated to manufacture of the annular anchoring structures 7 integrated into the beads 6 of tyre 3, through lying of at least one continuous thread element in the form of radially superposed coils and comprising at least one rubberised metallic cord. At least one fourth building station 14 can be dedicated to manufacture of the annular belt structure 8, obtained by laying, in circumferentially approached relationship, strip-like elements obtained from a continuous strip of elastomeric material comprising preferably metallic cords mutually parallel, and/or by winding at least one rubberised preferably metallic reinforcing cord into axially approached coils, in the crown portion of tyre 3. At least one fifth building station 15 can be provided for manufacture of the tread band 9 and sidewalls 10. The tread band 9 and sidewalls 10 are preferably obtained through winding of at least one continuous elongated element of elastomeric material into mutually approached coils.

The building stations 11, 12, 13, 14, 15 can operate simultaneously, each on a respective tyre 3 being processed, carried by a respective forming support 16, sequentially transferred from a building station to the subsequent building station, via robotized arms 17 or other suitable devices.

Tyres 3 built by apparatus 2 are sequentially transferred to at least one vulcanisation unit 18 integrated into the plant 1.

In accordance with the present invention, at least one of the components of elastomeric material of tyre 3, such as liner 5, fillers 7a and/or other parts of elastomeric material of the beads 6, sidewalls 10, tread band 9, under-belt layer, tread band under-layer, abrasion-preventing inserts and/or others, is obtained by an assembly device generally denoted at 19.

The assembly device 19 comprises at least one extruder 20 provided with a cylinder 21 into which elastomeric material is introduced. The cylinder 21, heated to a controlled temperature included, just as an indication, between about 50°C and about 100°C, operatively houses a rotating screw 22, by effect of which the elastomeric material is urged along the cylinder 21 itself, towards an outlet port 23 of the extruder 20. If required, the elastomeric material can be conveyed through a positive-displacement pump 24, a gear pump for example, that is operatively interposed between the rotating screw 22 and the outlet port 23, to ensure more uniformity of the flow rate therethrough.

Consequently, a continuous thread element 25 of raw elastomeric material having a substantially circular cross-section outline is delivered through the outlet port 23. Alternatively, the conformation of the outlet port 23 and, as a result, of the cross-section outline of the continuous thread element 25, can be of the ellipsoid type. In both said cases, the cross-section area of the outlet port 23 is preferably included between about 10 mm² and about 200 mm².

Said size features enable the continuous thread element 25 to be delivered at the desired linear speed corresponding to a so-called "target value" of the volumetric flow rate, included just as an indication between about 1 cm³/s and about 70 cm³/s, without too many deformations being imposed to the mass of the elastomeric material close to the outlet port 23. Thus it is advantageously possible to keep the elastomeric material temperature at the outlet port 23 to relatively reduced values, included between about 80°C and about 110°C, by way of example.

The continuous thread element 25 coming from the extruder 20 is guided towards a shaping device 26 comprising at least one pair of counter-rotating shaping rollers 27. A first shaping roller 27a can be of substantially cylindrical conformation, while at least one second shaping roller 27b has at least one circumferential groove 28 of suitable conformation. Thus a shaped clearance 29 is defined between the mutually approached shaping rollers 27, which shaped clearance 29, in a lying plane containing the rotation axes of the rollers themselves has an area preferably included between about 50% and about 100% of the area of the outlet port 23 of the extruder 20.

The continuous thread element 25 fed via the shaping rollers 27 is such shaped that it forms an elongated element 30 having a predetermined cross-section outline corresponding to the conformation of the shaped clearance. As clearly shown in Fig. 5, the shaped clearance 29 preferably has a substantially trapezoidal outline, and engages the elongated element 30 substantially over the whole extension of the cross-section outline of same. In more detail, engagement between the shaped clearance 29 and elongated element 30 takes place at a first and a second respectively opposite base sides 30a, 30b, and a first and a second height sides 30c, 30d, each extending between said first and second base sides 30a, 30b.

Operating close to the shaping rollers 27 is at least one device 31 for monitoring at least one parameter indicating the volumetric flow rate of the continuous thread element 25. The monitoring device 31 interacts with at least one adjusting device 32 to adjust the volumetric flow rate for feeding the continuous thread element 25 towards the shaping rollers 27.

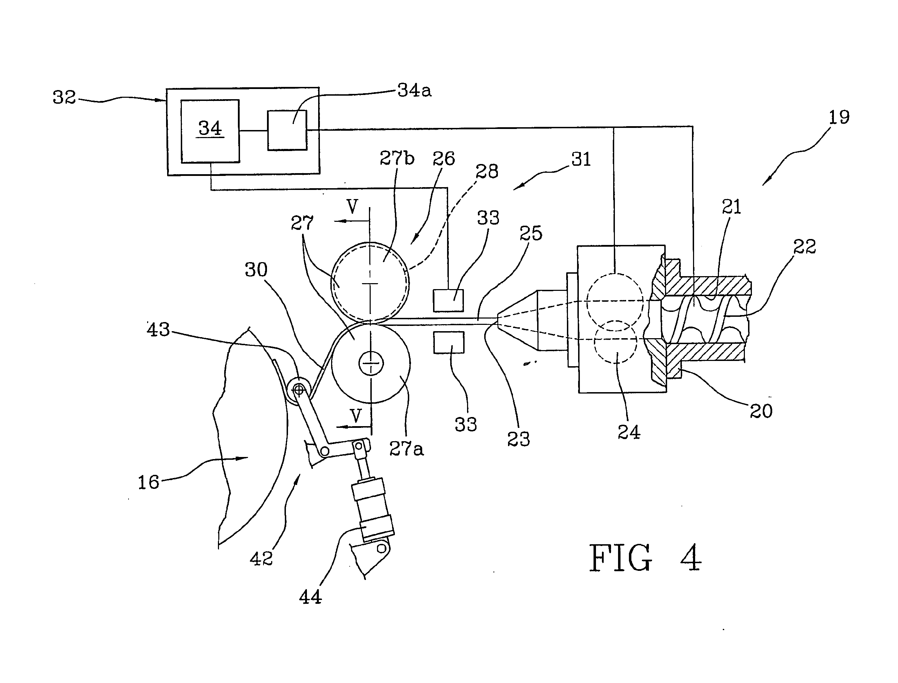

The monitoring device 31, for instance, may comprise an ultrasonic detector 33 of the laser beam or other type, positioned immediately upstream of the shaping rollers 27 (Fig. 4) and operating on the continuous thread element 25 to cyclically detect the cross-section area of same at a frequency included between about 1 Hz and about 50 Hz, just as an indication.

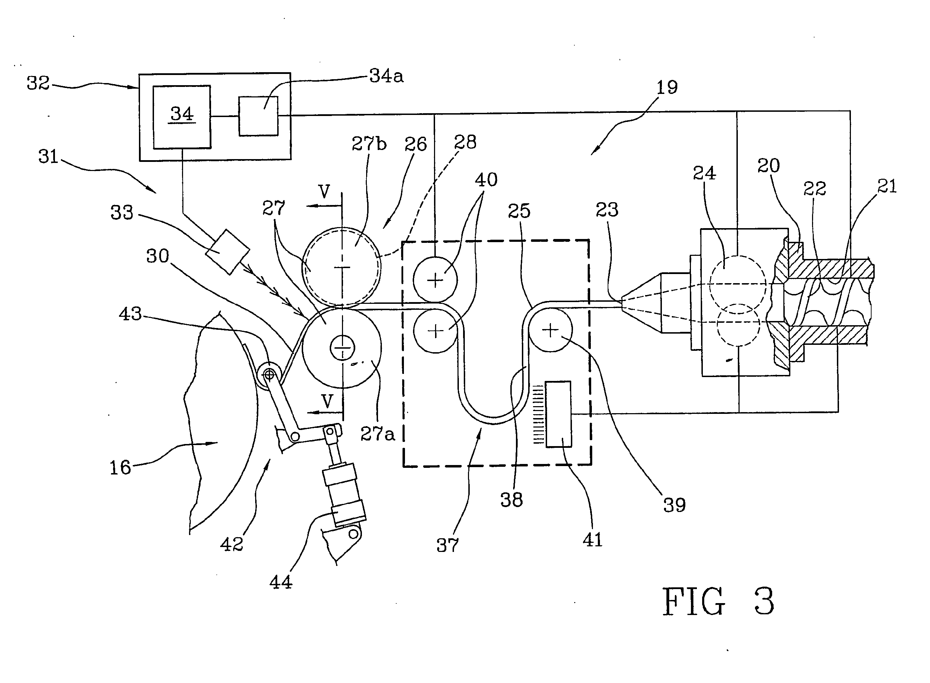

As shown in Fig. 3, the monitoring device 31 comprises at least one laser beam, ultrasonic or other detector operating on one of the shaping rollers 27, preferably the first roller 27a of cylindrical conformation, downstream of the shaped clearance 29 to cyclically detect, at a frequency included between about 1 Hz and about 50 Hz, the width size "D" of the elongated element 30 coming out of the shaped clearance itself.

The width-reading sensibility of detector 33 can be increased by providing at least one lateral interspace 35 in the outline of the shaped clearance 29. In the example shown, two lateral interspaces 35 are provided which extend on respectively opposite sides in the extension of the major base side 30a of the trapezoidal outline of the clearance itself, preferably in order to give the shaped clearance 29 a maximum width "A" at least as large as a maximum acceptability value "B" for the elongated element width 30.

The presence of the lateral interspaces 35 causes formation of two tab-shaped projections 36 during shaping of the continuous thread element 25, in the extension of the major base 30a of the elongated element 30, which projections 36 have a thickness "S" included, by way of example, between about 0.1 mm and about 0.5 mm. Due to the relatively reduced thickness, the tab-shaped projections 36 show a noticeably variable width depending on variations, even if of small value, in the flow rate of the elastomeric material through the shaped clearance 29. In fact, due to the trapezoidal conformation of the shaped clearance 29, the elastomeric material acceding to the clearance itself tends to fill the portion close to the minor base of the trapezoidal conformation and to subsequently expand into the region of the major base. A residual part of the elastomeric material will therefore fill the lateral interspaces 35 to a more or less important degree depending on the flow rate through the shaped clearance 29. As a result, even small variations in the flow rate give rise to important size variations in the tab-shaped projections 36 formed along the edges of the elongated element 30 and, consequently, in the width "D" of the elongated element 30 itself at a given instant. The linear speed of the continuous thread element 25 being known, as it is detectable in case of need by an encoder (not shown) associated with a driving motor of the shaping rollers 27 for example, an electronic processing unit 34 being part of the adjusting device 32 can easily calculate the corresponding flow rate at each reading cycle carried out by detector 33.

A comparator 34a associated with the electronic processing unit 34 compares the flow rate parameters cyclically detected by detector 33 with an ideal flow rate value stored beforehand, in order to enable the adjusting device 32 to adjust the feeding speed of the continuous thread element 25 towards the shaping rollers 27 so that the volumetric flow rate through the shaped clearance 29 and the outlet port 23 shall be maintained substantially equal to said predetermined target value, with a difference preferably less than 0.5%.

In more detail, when detector 33 detects a width of the elongated element corresponding to, or smaller than a predetermined minimum acceptability value "C", the adjusting device 32 enables an increase in the feeding speed of the continuous thread element 25 towards the shaping rollers 27. Vice versa, when detector 33 detects a width of the elongated element corresponding to or greater than a predetermined maximum acceptability value "B", the adjusting device 32 enables a reduction in the feeding speed of the continuous thread element 25 towards the shaping rollers 27. The width "D" of the elongated element is therefore maintained within said minimum and maximum acceptability values.

Adjustment of the feeding speed of the thread element can be carried out by modifying the delivery speed of the elastomeric material through the extruder 20, acting for instance on the rotation speed of the rotating screw 22 or, in the presence of the positive-displacement pump 24, modifying the driving speed of the pump itself.

In an alternative embodiment, as shown in the dashed box in Fig. 3, at least one storage device 37 for accumulation of the continuous thread element 25 can be interposed between the extruder 20 and the shaping rollers 27 to enable operation of the extruder 20 to be temporarily increased, slowed down or stopped without operation of the shaping rollers 27 being required to be correspondingly increased, slowed down or stopped, and vice versa. To this aim, the continuous thread element 25 coming out of the extruder 20 is conveyed to a loop-shaped storage length 38 extending from one intermediate roller 39 placed close to the outlet port 23 of the extruder 20 for example, until a driving device 40 consisting of opposite rollers for example, placed downstream of the storage length 38 for feeding the shaping rollers 27 with the continuous thread element 25. In this case, the adjusting device 32 interacts with the driving device 40 to adjust the feeding speed of the continuous thread element 25 towards the shaping rollers 27. An optical reader 41 acting on the bottom of the storage length 38 operates a feedback on the rotating screw 22 or the positive-displacement pump 24 if present, to adjust operation of the extruder 20 so as to keep the longitudinal size of the storage length 38 within a predetermined range.

An applicator device 42 operating downstream of the shaping rollers 27 applies the elongated element 30 coming from the shaping rollers 27 onto the forming support 16. During application, the forming support 16 carried in overhanging by one of said robotized arms 17, is driven in rotation and suitably moved in front of the applicator device 42 to distribute the.elongated element 30 in the form of coils disposed in side by side relationship and/or superposed, so as to form a liner 5 for example, or any other component of elastomeric material of the tyre 3 being processed.

The applicator device 42 comprises at least one roller or other applicator member 43 operatively supported relative to the shaping rollers 27, to some distance therefrom, and acting in thrust relationship towards the forming support 16, by effect of a pneumatic actuator 44 for example, to apply the elongated element 30 onto the forming support 16 itself.

## Claims

1. A process for building tyres, comprising the step of assembling components of elastomeric material on a forming support (16), in which at least one of said components of elastomeric material is manufactured by the steps of:
- delivering a continuous thread element (25) of elastomeric material of substantially circular or of ellipsoid type section from an extruder (20);
- shaping the continuous thread element (25) coming from the extruder (20), to form an elongated element (30) of a predetermined cross-section outline;
- applying the elongated element (30) in the form of wound up coils onto the forming support (16), to form said at least one component of elastomeric material of the tyre (3);
wherein said shaping operation is carried out by feeding the continuous thread element (25) through a pair or counter-rotating shaping rollers (27), at least one of the shaping rollers comprising a circumferential groove,
the pair of shaping rollers configured to mutually approach, defining a shaped clearance therebetween whereby the predetermined cross-section outline corresponds to the conformation of the shaped clearance;
said process further comprising the steps of:
- monitoring the volumetric flow rate of the elastomeric material between the shaping rollers by cyclically detect the cross-section area of the continuous thread element (25) close to the shaping rollers (27) and upstream of the shaping rollers (27);
- adjusting a feeding speed of the continuous thread element (25) towards the shaping rollers (27) to keep the volumetric flow rate value within a predetermined range.

2. A process as claimed in claim 1, wherein the delivery step is carried out by introducing the elastomeric material into a cylinder (21) longitudinally housing a rotating screw (22) to urge the elastomeric material along the cylinder (21) towards an outlet port (23) of the extruder (20).

3. A process as claimed in claim 2, wherein the delivery step further comprises the step of conveying the elastomeric material through a positive displacement pump (24) operatively interposed between the rotating screw (22) and the outlet port (23) of the extruder (20).

4. A process as claimed in one or more of the preceding claims, further comprising a storage step for accumulation of the continuous thread element (25) in a storage length (38) included between the extruder (20) and the shaping rollers (27).

5. A process as claimed in claim 4, wherein the continuous thread element (25) is fed to the shaping rollers (27) by at least one driving device (40) disposed downstream of the storage length (38).

6. A process as claimed in one or more of the preceding claims, wherein the feeding speed of the continuous thread element (25) towards the shaping rollers (27) is adjusted by modifying a delivery speed of the elastomeric material through the extruder (20).

7. A process as claimed in claim 6, wherein the feeding speed of the continuous thread element (25) towards the shaping rollers (27) is adjusted by modifying a rotation speed of a rotating screw (22) being part of said extruder (20).

8. A process as claimed in one or more of claims 6 and 7, wherein the feeding speed of the continuous thread element (25) towards the shaping rollers (27) is adjusted by modifying a driving speed of a positive-volume pump (24) operatively disposed upstream of an outlet port (23) of the extruder (20).

9. A process as claimed in one or more of claims 5 to 8, wherein the feeding speed of the continuous thread element (25) towards the shaping rollers (27) is adjusted by acting on said at least one driving device (40).

10. A process as claimed in one or more of the preceding claims, wherein the shaping operation comprises the step of conducting the continuous thread element (25) through the shaped clearance (29) defined between the shaping rollers (27).

11. A process as claimed in claim 10, wherein said shaped clearance (29) engages the elongated element (30) substantially over the whole extension of a cross-section outline of the elongated element (30) itself.

12. A process as claimed in claim 10 or 11, wherein said shaped clearance (29) engages the elongated element (30) at a first and a second mutually opposite base side (30a, 30b), and a first and a second height sides (30c, 30d), each extending between said first and second base sides (30a, 30b).

13. A process as claimed in claim 1, wherein the feeding speed of the continuous thread element (25) towards the shaping rollers (27) is adjusted in a position upstream to the shaping rollers (27).

14. An apparatus for building tyres comprising:
- at least one forming support (16);
- at least one assembly device (19) to assemble components of elastomeric material on the forming support (16);
wherein said at least one assembly device (19) comprises:
- at least one extruder (20) to deliver a continuous thread element (25) of elastomeric material of substantially circular or of ellipsoid type section;
- at least one shaping device (26) to shape the continuous thread element (25) coming from the extruder (20), comprising at least one pair of counter-rotating shaping rollers (27) engaging the continuous thread element (25) to form an elongated element (30) having a predetermined cross-section outline; at least one of the shaping rollers comprising a circumferential groove, the pair of shaping rollers configured to mutually approach, defining a shaped clearance therebetween whereby the predetermined cross-section outline corresponds to the conformation of the shaped clearance
- at least one applicator device (42) to apply said elongated element (30) wound up into coils, onto the forming support (16), to form said at least one component of elastomeric material of the tyre (3); wherein said at least one shaping device (26) further comprises:
- at least one device (31) for monitoring the volumetric flow rate of the elastomeric material between the shaping rollers comprising at least one detector (33) for cyclically detecting a cross-section area of the continuous thread element (25) close to the shaping rollers (27) and upstream of the shaping rollers (27);
- at least one adjusting device (32) to adjust a feeding speed of the continuous thread element (25) towards the shaping rollers (27) to keep the volumetric flow rate value within a predetermined range.

15. An apparatus as claimed in claim 14, wherein said extruder (20) comprises at least one cylinder (21) longitudinally housing a rotating screw (22) to urge the elastomeric material along the cylinder (21) towards an outlet port (23) of the extruder (20).

16. An apparatus as claimed in claim 15, further comprising at least one positive-displacement pump (24) operatively interposed between the rotating screw (22) and the outlet port (23) of the extruder (20).

17. An apparatus as claimed in one or more of claims 14 to 16, further comprising at least one storage device (37) for accumulation of the continuous thread element (25) in a storage length (38) included between the extruder (20) and the shaping rollers (27).

18. An apparatus as claimed in claim 17, further comprising at least one driving device (40) disposed downstream of the storage length (38) to feed the shaping rollers (27) with the continuous thread element (25).

19. An apparatus as claimed in one or more of claims 14 to 18, wherein said at least one adjusting device (32) interacts with the extruder (20) to modify the delivery speed of the elastomeric material through the extruder (20) itself.

20. An apparatus as claimed in claim 19, wherein said adjusting device (32) interacts with the extruder (20) modifying a rotation speed of a rotating screw (22) being part of the extruder (20) itself.

21. An apparatus as claimed in one or more of claims 19 and 20, wherein said adjusting device (32) interacts with the extruder (20) modifying a driving speed of a positive-displacement pump (24) operatively disposed upstream of an outlet port (23) of the extruder (20).

22. An apparatus as claimed in one or more of claims 18 to 21, wherein said at least one adjusting device (32) interacts with said at least one driving device (40) to adjust the feeding speed of the continuous thread element (25) towards the shaping rollers (27).

23. An apparatus as claimed in claim 14, wherein said shaped clearance (29) engages the elongated element (30) substantially over the whole extension of a cross-section outline of the elongated element (30) itself.

24. An apparatus as claimed in claim 14 or 23, wherein said shaped clearance (29) has a first and a second mutually opposite base sides (30a, 30b), and a first and a second height sides (30c, 30d), each extending between said first and second base sides (30a, 30b).

25. An apparatus as claimed in one or more of claims 14 to 24, wherein one of said shaping rollers (27) is substantially cylindrical, said shaped clearance (29) being defined by a circumferential groove (28) formed in the other shaping roller.

26. An apparatus as claimed in claim 14, wherein said at least one adjusting device (32) interacts with a device disposed in a position upstream to the shaping rollers (27).

## Patentansprüche

1. Verfahren zum Bauen von Reifen, das den Schritt des Montierens von Komponenten aus elastomerem Material auf einem Formträger (16) umfasst, bei dem mindestens eine der Komponenten aus elastomerem Material hergestellt wird durch die Schritte:
- Zuführen eines kontinuierlichen Fadenelements (25) aus elastomerem Material mit in Wesentlichem kreisförmigem oder Ellipsoid-Typ-Querschnitt aus einem Extruder (20);
- Formen des aus dem Extruder (20) stammenden kontinuierlichen Fadenelements (25), um ein langgestrecktes Element (30) eines vorgegebenen Querschnittsumrisses zu bilden;
- Applizieren des langgestreckten Elements (30), in der Form von aufgewickelten Windungen, auf den Formträger (16), um die mindestens eine Komponente aus elastomerem Material des Reifens (3) zu bilden;
wobei der Formgebungsvorgang ausgeführt wird, indem das kontinuierliche Fadenelement (29) durch ein Paar an sich gegenläufig drehenden Formwalzen (27) mit einer Umfangsnut zugeführt wird,
das Paar an Formwalzen dazu ausgebildet ist, sich gegenseitig anzunähern, und dazwischen einen geformten Zwischenraum zu definieren, wobei der vorgegebene Querschnittsumriss der Gestalt des geformten Zwischenraums entspricht;
wobei das Verfahren ferner die Schritte umfasst:
- Überwachen der volumetrischen Durchflussrate des elastomeren Materials zwischen den Formwalzen durch zyklisches Delektieren der Querschnittsfläche des kontinuierlichen Fadenelements (25) in der Nähe der Formwalzen (27) und stromaufwärts der Formwalzen (27);
- Einstellen einer Zufuhrgeschwindigkeit des kontinuierlichen Fadenelements (25) in Richtung der Formwalzen (27), um den volumetrischen Durchflussratenwert innerhalb eines vorgegebenen Bereichs zu halten.

2. Verfahren nach Anspruch 1, bei dem der Zuführungsschritt ausgeführt wird, indem das elastomere Material in einem Zylinder (21), der in Längsrichtung eine Spindelschraube (22) aufnimmt, eingeführt wird, um das elastomere Material entlang des Zylinders (21) in Richtung eines Ausgangsanschlusses (23) des Extruders (20) zu drängen.

3. Verfahren nach Anspruch 2, bei dem der Zuführungsschritt ferner den Schritt des Beförderns des elastomeren Materials durch eine positive Verdrängerpumpe (24) umfasst, die operativ zwischen der Spindelschraube (22) und dem Ausgangsanschluss (23) des Extruders (20) angeordnet ist.

4. Verfahren nach einem oder mehreren der vorstehenden Ansprüche, das ferner einen Speicherungsschritt zum Akkumulieren des kontinuierlichen Fadenelements (25) in einer Speicherlänge (38) umfasst, die zwischen dem Extruder (20) und den Formwalzen (27) eingeschlossen ist.

5. Verfahren nach Anspruch 4, bei dem das kontinuierliche Fadenelement (25) den Formwalzen (27) mittels mindestens einer Antriebseinrichtung (40) zugeführt wird, die stromabwärts der Speicherlänge (38) angeordnet ist.

6. Verfahren nach einem oder mehreren der vorstehenden Ansprüche, bei dem die Zufuhrgeschwindigkeit des kontinuierlichen Fadenelements (25) in Richtung der Formwalzen (27) durch Modifizieren einer Zuführungsgeschwindigkeit des elastomeren Materials durch den Extruder (20) eingestellt wird.

7. Verfahren nach Anspruch 6, bei dem die Zufuhrgeschwindigkeit des kontinuierlichen Fadenelements (25) in Richtung der Formwalzen (27) durch Modifizieren einer Drehgeschwindigkeit einer Spindelschraube (22), die Teil des Extruders (20) ist, eingestellt wird.

8. Verfahren nach Anspruch 6 und/oder 7, bei dem die Zufuhrgeschwindigkeit des kontinuierlichen Fadenelements (25) in Richtung der Formwalzen (27) durch Modifizieren einer Antriebsgeschwindigkeit einer positiven Volumenpumpe (24), die operativ stromaufwärts eines Ausgangsanschlusses (23) des Extruders (20) angeordnet ist, eingestellt wird.

9. Verfahren nach einem oder mehreren der Ansprüche 5-8, bei dem die Zufuhrgeschwindigkeit des kontinuierlichen Fadenelements (25) in Richtung der Formwalzen (27) durch Einwirken auf die mindestens eine Antriebseinrichtung (40) eingestellt wird.

10. Verfahren nach einem oder mehreren der vorstehenden Ansprüche, bei dem der Formgebungsvorgang den Schritt des das kontinuierliche Fadenelement (25) durch den geformten Zwischenraum (29), der zwischen den Formwalzen (27) definiert ist, Führens umfasst.

11. Verfahren nach Anspruch 10, bei dem der geformte Zwischenraum (29) im Wesentlichen über die gesamte Erstreckung eines Querschnittsumrisses des langgestreckten Elements (30) selbst mit dem langgestreckten Element (30) in Eingriff steht.

12. Verfahren nach Anspruch 10 oder 11, bei dem der geformte Zwischenraum (29) mit dem langgestreckten Element (30) bei ersten und zweiten, gegenseitig entgegen gesetzten Basisseiten (30a, 30b), und ersten und zweiten Höhenseiten (30c, 30d), die sich jeweils zwischen den ersten und zweiten Basisseiten (30a, 30b) erstrecken, in Eingriff steht.

13. Verfahren nach Anspruch 1, bei dem die Zufuhrgeschwindigkeit des kontinuierlichen Fadenelements (25) in Richtung der Formwalzen (27) bei einer Position eingestellt wird, die stromaufwärts der Formwalzen (27) liegt.

14. Vorrichtung zum Bauen von Reifen, mit:
- mindestens einem Formträger (16);
- mindestens einer Montageeinrichtung (19) zum Montieren von Komponenten aus elastomerem Material auf dem Formträger (16);
wobei die mindestens eine Montageeinrichtung (19) aufweist:
- mindestens einen Extruder (20) zum Zuführen eines kontinuierlichen Fadenelements (25) aus elastomerem Material mit einem im Wesentlichen kreisförmigen oder Ellipsoid-Typ-Querschnitt;
- mindestens eine Formgebungseinrichtung (26) zum Formen des aus dem Extruder (20) stammenden kontinuierlichen Fadenelements (25), das mindestens ein Paar an sich gegenläufig drehenden Formwalzen (27) aufweist, die mit dem kontinuierlichen Fadenelement (25) in Eingriff stehen, um ein langgestrecktes Element (30) mit einem vorgegebenen Querschnittsumriss zu bilden; wobei mindestens eine der Formwalzen eine Umfangsnut aufweist, und das Paar an Formwalzen, das zur gegenseitigen Annäherung ausgebildet ist, dazwischen einen geformten Zwischenraum definiert, wobei der vorgegebene Querschnittsumriss einer Gestalt des geformten Zwischenraums entspricht;
- mindestens eine Applikationseinrichtung (42) zum Applizieren des langgestreckten Elements (30), das in Windungen aufgewickelt ist, auf den Formträger (16), um die mindestens eine Komponente aus elastomerem Material des Reifens (3) zu bilden;
wobei die mindestens eine Formgebungseinrichtung (26) ferner aufweist:
- mindestens eine Einrichtung (31) zum Überwachen der volumetrischen Durchflussrate des elastomeren Materials zwischen den Formwalzen, mit mindestens einem Detektor (33) zum zyklischen Detektieren eines Querschnittsbereichs des kontinuierlichen Fadenelements (25) in der Nähe der Formwalzen (27) und stromaufwärts der Formwalzen (27);
- mindestens eine Einstelleinrichtung (32) zum Einstellen einer Zufuhrgeschwindigkeit des kontinuierlichen Fadenelements (25) in Richtung der Formwalzen (27), um den volumetrischen Durchflussratenwert innerhalb eines vorgegebenen Bereichs zu halten.

15. Vorrichtung nach Anspruch 14, bei der der Extruder (20) mindestens einen Zylinder (21) aufweist, der in Längsrichtung eine Schraubenspindel (22) aufnimmt, um das elastomere Material entlang des Zylinders (21) in Richtung eines Ausgangsanschlusses (23) des Extruders (20) zu drängen.

16. Vorrichtung nach Anspruch 15, die ferner mindestens eine positive Verdrängerpumpe (24) aufweist, die operativ zwischen der Schraubenspindel (22) und dem Ausgangsanschluss (23) des Extruders (20) angeordnet ist.

17. Vorrichtung nach einem oder mehreren der Ansprüche 14-16, die ferner mindestens eine Speichereinrichtung (37) zum Akkumulieren des kontinuierlichen Fadenelements (25) in einer Speicherlänge (38) aufweist, die zwischen dem Extruder (20) und den Formwalzen (27) eingeschlossen ist.

18. Vorrichtung nach Anspruch 17, die ferner mindestens eine Antriebseinrichtung (40) aufweist, die stromabwärts der Speicherlänge (38) angeordnet ist, zum Zuführen des kontinuierlichen Fadenelements (25) an die Formwalzen (27).

19. Vorrichtung nach einem oder mehreren der Ansprüche 14-18, bei der die mindestens eine Einstelleinrichtung (32) mit dem Extruder (20) wechselwirkt, um die Zuführungsgeschwindigkeit des elastomeren Materials durch den Extruder (20) selbst zu modifizieren.

20. Vorrichtung nach Anspruch 19, bei der die Einstelleinrichtung (32) mit dem Extruder (20) wechselwirkt, um eine Drehgeschwindigkeit der Schraubenspindel (22), die Teil des Extruders (20) selbst ist, zu modifizieren.

21. Vorrichtung nach Anspruch 19 und/oder 20, bei der die Einstelleinrichtung (32) mit dem Extruder (20) wechselwirkt, um eine Antriebsgeschwindigkeit einer positiven Verdrängerpumpe (24) zu modifizieren, die operativ stromaufwärts eines Ausgangsanschlusses (23) des Extruders (20) angeordnet ist.

22. Vorrichtung nach einem oder mehreren der Ansprüche 18-21, bei der die mindestens eine Einstelleinrichtung (32) mit der mindestens einen Antriebseinrichtung (40) wechselwirkt, um die Zufuhrgeschwindigkeit des kontinuierlichen Fadenelements (25) in Richtung der Formwalzen (27) einzustellen.

23. Vorrichtung nach Anspruch 14, bei welcher der geformte Zwischenraum (29) mit dem langgestreckten Element (30) im Wesentlichen über die gesamte Erstreckung eines Querschnittsumrisses des langgestreckten Elements (30) selbst in Eingriff steht.

24. Vorrichtung nach Anspruch 14 oder 23, bei welcher der geformte Zwischenraum (29) erste und zweite, gegenseitig entgegen gesetzte Basisseiten (30a, 30b), und erste und zweite Höhenseiten (30c, 30d) aufweist, die sich jeweils zwischen der ersten und zweiten Basisseite (30a, 30b) erstrecken.

25. Vorrichtung nach einem oder mehreren der Ansprüche 14-24, bei der eine der Formwalzen (27) im Wesentlichen zylindrisch ausgebildet ist, und der geformte Zwischenraum (29) durch eine in der anderen Formwalze gebildete Umfangsnut (28) definiert ist.

26. Vorrichtung nach Anspruch 14, bei der die mindestens eine Einstelleinrichtung (32) mit einer Einrichtung wechselwirkt, die an einer stromaufwärts der Formwalzen (27) liegenden Position angeordnet ist.

## Revendications

1. Procédé de construction de pneus, comprenant l'étape d'assembler des composants en matériau élastomère sur un support de formage (16), dans lequel au moins un desdits composants en matériau élastomère est fabriqué par les étapes de :
- faire par une extrudeuse (20) un élément filaire continu (25) en matériau élastomère de section de type sensiblement circulaire ou de type ellipsoïde ;
- mettre en forme l'élément filaire continu (25) provenant de l'extrudeuse (20), pour former un élément allongé (30) d'un contour de section transversale prédéterminée ;
- appliquer l'élément allongé (30) sous forme de spires enroulées sur le support de formage (16), pour former ledit au moins un composant en matériau élastomère du pneu (3) ;
dans lequel ladite opération de mettre en forme est réalisée en faisant passer l'élément filaire continu (25) par une paire de rouleaux de mise en forme contrarotatifs (27), au moins un des rouleaux de mise en forme comprenant une rainure circonférentielle,
la paire de rouleaux de mise en forme étant configurée pour s'approcher mutuellement, définissant entre eux un espace libre de formage;
de sorte que le contour de section transversale prédéterminée correspond à la conformation de l'espace libre de formage,
ledit procédé comprenant en outre les étapes de :
- surveiller le débit volumétrique du matériau élastomère entre les rouleaux de mise en forme par détection cyclique de la surface de section transversale de l'élément filaire continu (25) à proximité des rouleaux de mise en forme (27) et en amont des rouleaux de mise en forme (27) ;
- régler une vitesse d'alimentation de l'élément filaire continu (25) vers les rouleaux de mise en forme (27) pour conserver la valeur du débit volumétrique dans une gamme prédéterminée.

2. Procédé selon la revendication 1, dans lequel l'étape de fourniture est réalisée en introduisant le matériau élastomère dans un cylindre (21) logeant longitudinalement une vis en rotation (22) pour pousser le matériau élastomère le long du cylindre (21) vers un orifice de sortie (23) de l'extrudeuse (20).

3. Procédé selon la revendication 2, dans lequel l'étape de fourniture comprend en outre l'étape de convoyer le matériau élastomère par une pompe volumétrique (24) interposée fonctionnellement entre la vis en rotation (22) et l'orifice de sortie (23) de l'extrudeuse (20).

4. Procédé selon l'une quelconque ou plusieurs des revendications précédentes, comprenant en outre une étape de stockage pour accumuler l'élément filaire continu (25) dans une longueur de stockage (38) incluse entre l'extrudeuse (20) et les rouleaux de mise en forme (27).

5. Procédé selon la revendication 4, dans lequel l'élément filaire continu (25) alimente les rouleaux de mise en forme (27) par au moins un dispositif d'entraînement (40) disposé en aval de la longueur de stockage (38).

6. Procédé selon l'une quelconque ou plusieurs des revendications précédentes, dans lequel la vitesse d'alimentation de l'élément filaire continu (25) vers les rouleaux de mise en forme (27) est réglée en modifiant une vitesse de fourniture du matériau élastomère par l'extrudeuse (20).

7. Procédé selon la revendication 6, dans lequel la vitesse d'alimentation de l'élément filaire continu (25) vers les rouleaux de mise en forme (27) est réglée en modifiant une vitesse de rotation d'une vis en rotation (22) faisant partie de ladite extrudeuse (20).

8. Procédé selon l'une quelconque ou plusieurs des revendications 6 et 7, dans lequel la vitesse d'alimentation de l'élément filaire continu (25) vers les rouleaux de mise en forme (27) est réglée en modifiant une vitesse d'entraînement d'une pompe volumétrique (24) disposée fonctionnellement en amont d'un orifice de sortie (23) de l'extrudeuse (20).

9. Procédé selon l'une quelconque ou plusieurs des revendications 5 à 8, dans lequel la vitesse d'alimentation de l'élément filaire continu (25) vers les rouleaux de mise en forme (27) est réglée par action sur ledit au moins un dispositif d'entraînement (40).

10. Procédé selon l'une quelconque ou plusieurs des revendications précédentes, dans lequel l'opération de mise en forme comprend l'étape de conduire l'élément filaire continu (25) à travers l'espace libre de formage (29) défini entre les rouleaux de mise en forme (27).

11. Procédé selon la revendication 10, dans lequel ladite forme libre (29) vient en prise avec l'élément allongé (30) sensiblement sur toute l'étendue d'un contour de section transversale de l'élément allongé (30) lui-même.

12. Procédé selon la revendication 10 ou 11, dans lequel ledit espace libre de formage (29) vient en prise avec l'élément allongé (30) en un premier et un deuxième coté de base opposé (30a, 30b), et un premier et un deuxième côté de hauteur (30c, 30e), chacun s'étendant entre lesdits premier et deuxième côtés de base (30a, 30b).

13. Procédé selon la revendication 1, dans lequel la vitesse d'alimentation de l'élément filaire continu (25) vers les rouleaux de mise en forme (27) est réglée dans un emplacement situé en amont des rouleaux de mise en forme (27).

14. Appareil de construction de pneus comprenant :
- au moins un support de formage (16) ;
- au moins un dispositif d'assemblage (19) pour assembler des composants en matériau élastomère sur le support de formage (16),
dans lequel ledit au moins un dispositif d'assemblage (19) comprend :
- au moins une extrudeuse (20) pour fournir un élément filaire continu (25) en matériau élastomère de section de type sensiblement circulaire ou de type ellipsoïde ;
- au moins un dispositif de mise en forme pour mettre en forme l'élément filaire continu (25) provenant de l'extrudeuse (20), comprenant au moins une paire de rouleaux de mise en forme contrarotatifs (27) venant en prise avec l'élément filaire continu (25) pour former un élément allongé (30) ayant un contour de section transversale prédéterminé ; au moins un des rouleaux de mise en forme comprenant une rainure circonférentielle, la paire de rouleaux de mise en forme étant configurée pour s'approcher mutuellement, en définissant entre eux un espace libre de formage de sorte que le contour de section transversale prédéterminé correspond à la conformation de l'espace libre de formage
- au moins un dispositif applicateur (42) pour appliquer ledit élément allongé (30) enroulé en spires, sur le support de formage (16), pour former le dit au moins un composant en matériau élastomère du pneu (3) ;
dans lequel ledit au moins un dispositif de mise en forme (26) comprend en outre :
- au moins un dispositif (31) pour surveiller le débit volumétrique du matériau élastomère entre les rouleaux de mise en forme, comprenant au moins un détecteur (33) pour détecter cycliquement une aire de section transversale de l'élément filaire continu (25) à proximité des rouleaux de mise en forme (27) et en amont des rouleaux de mise en forme (27) ;
- au moins un dispositif de réglage (32) pour régler une vitesse d'alimentation de l'élément filaire continu (25) vers les rouleaux de mise en forme (27) pour conserver la valeur du débit volumétrique dans une gamme prédéterminée.

15. Appareil selon la revendication 14, dans lequel ladite extrudeuse (20) comprend au moins un cylindre (21) logeant longitudinalement une vis en rotation (22) pour pousser le matériau élastomère le long du cylindre (21) vers un orifice de sortie (23) de l'extrudeuse (20).

16. Appareil selon la revendication 15, comprenant en outre au moins une pompe volumétrique (24) interposée fonctionnellement entre la vis en rotation (22) et l'orifice de sortie (23) de l'extrudeuse (20).

17. Appareil selon l'une quelconque ou plusieurs des revendications 14 à 16, comprenant en outre au moins un dispositif de stockage (37) pour accumuler l'élément filaire continu (25) dans une longueur de stockage (38) incluse entre l'extrudeuse (20) et les rouleaux de mise en forme (27).

18. Appareil selon la revendication 17, comprenant en outre au moins un dispositif d'entraînement (40) disposé en aval de la longueur de stockage (38) pour alimenter les rouleaux de mise en forme (27) avec l'élément filaire continu (25).

19. Appareil selon l'une quelconque ou plusieurs des revendications 14 à 18, dans lequel ledit au moins un dispositif de réglage (32) interagit avec l'extrudeuse (20) pour modifier la vitesse d'alimentation de l'élément filaire continu par l'extrudeuse (20) elle-même.

20. Appareil selon la revendication 19, dans lequel ledit dispositif de réglage (32) interagit avec l'extrudeuse (20) pour modifier une vitesse de rotation d'une vis en rotation (22) faisant partie de l'extrudeuse (20) elle-même.

21. Appareil selon l'une quelconque ou plusieurs des revendications 19 et 20, dans lequel ledit dispositif de réglage (32) interagit avec l'extrudeuse (20) pour modifier une vitesse d'entraînement d'une pompe volumétrique (24) disposée fonctionnellement en amont d'un orifice de sortie (23) de l'extrudeuse (20).

22. Appareil selon l'une quelconque ou plusieurs des revendications 18 à 21, dans lequel ledit au moins un dispositif de réglage (32) interagit avec ledit au moins un dispositif d'entraînement (30) pour régler la vitesse d'alimentation de l'élément filaire continu (25) vers les rouleaux de mise en forme (27).

23. Appareil selon la revendication 14, dans lequel ledit espace libre de formage (29) vient en prise avec l'élément allongé (30) sensiblement sur toute l'étendue d'un contour de section transversale de l'élément allongé (30) lui-même.

24. Appareil selon la revendication 14 ou 23, dans lequel ledit espace libre de formage (29) a un premier et un deuxième côté de base opposés (30a, 30b), et un premier et un deuxième côté de hauteur (30c, 30e), chacun s'étendant entre lesdits premier et deuxième côtés de base (30a, 30b).

25. Appareil selon l'une ou plusieurs des revendications 14 à 24, dans lequel au moins un desdits rouleaux de mise en forme (27) est sensiblement cylindrique, ledit espace libre de formage (29) étant défini par une rainure circonférentielle (28) formée dans l'autre rouleau de mise en forme.

26. Appareil selon la revendication 14, dans lequel ledit au moins un dispositif de réglage (32) interagit avec un dispositif disposé à un emplacement en amont des rouleaux de mise en forme (27).
